# EUROPEAN PATENT APPLICATION

(11) **EP 1 914 966 A1**
(43) Date of publication of application: **23.04.2008**
(21) Application number: 07118599.5
(22) Date of filing: 16.10.2007
(51) Int. Cl.: H04M 1/247, H04M 1/725, G06F 3/048, H04M 1/2745

(54) **Mobile communication terminal and method of processing input signal thereof**

(30) Priority: 18.10.2006 KR 20060101555
(71) Applicant: LG Electronics Inc., Yeongdeungpo-gu Seoul 150-721 (KR)
(72) Inventor: Ryu, Ho Sung, Kumchon-gu, 153-801, SEOUL (KR)
(74) Representative: Cabinet Plasseraud

(57) **Abstract**

A mobile communication terminal including a scroll device configured to output a scrolling signal, a display configured to display information, and a control unit configured to variably recognize the scrolling signal of the scroll device based on operational modes of the mobile communication terminal such that an amount of information scrolled on the display using the scroll device variably changes based on the operational modes of the mobile communication terminal.

## Description

This application claims priority to Korean Patent Application No. 10-2006-0101555, filed on October 18, 2006, which is hereby incorporated by reference as if fully set forth herein.

### BACKGROUND OF THE INVENTION

### Field of the Invention

The present invention relates to a mobile communication terminal and corresponding method that variably sets a scrolling speed of a scroll device based on different operational modes of the mobile terminal.

### Discussion of the Related Art

Mobile terminals can now be used for many additional functions besides the basic call function. For example, users can now access the Internet, send and receive text and voice messages, play games, watch videos and other broadcasts, perform scheduling functions, etc. using their mobile terminal.

Further, as the number of functions provided with the mobile terminal has increased, so has the amount of menu options used to execute the various functions on the terminal. For example, to send a text message, the user first selects a main menu, and then selects various submenus and a contact list to select the person the text message is being sent to.

Also, the main menu includes a plurality of submenus, the submenus often include a plurality of other submenus, and the contact list often includes several names. Thus, the user must perform several steps using a navigation key on the terminal to execute a particular function on the terminal. This inconveniences the user and is time consuming.

### SUMMARY OF THE INVENTION

Accordingly, one object of the present invention is to address the above-noted and other problems.

Another object of the present invention is to provide a mobile communication terminal and corresponding method that variably sets a scrolling speed of a scroll device based on different operational modes of the terminal.

To achieve these objects and other advantages and in accordance with the purpose of the invention, as embodied and broadly described herein, the present invention provides in one aspect a mobile communication terminal including a scroll device configured to output a scrolling signal, a display configured to display information, and a control unit configured to variably recognize the scrolling signal of the scroll device based on operational modes of the mobile communication terminal such that an amount of information scrolled on the display using the scroll device variably changes based on the operational modes of the mobile communication terminal.

In another aspect, the present invention provides a method of scrolling information on a mobile communication terminal, which includes outputting a scrolling signal corresponding to a scroll device being moved, and variably recognizing the output scrolling signal of the scroll device based on operational modes of the mobile communication terminal such that an amount of information scrolled according to the movement of the scroll device variably changes based on the operational modes of the mobile communication terminal.

Further scope of applicability of the present invention will become apparent from the detailed description given hereinafter. However, it should be understood that the detailed description and specific examples, while indicating preferred embodiments of the invention, are given by illustration only, since various changes and modifications within the spirit and scope of the invention will become apparent to those skilled in the art from this detailed description.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a block diagram of a mobile communication terminal according to an embodiment of the present invention;

FIG. 2 is an overview of a mobile communication terminal according to an embodiment of the present invention;

FIG. 3 is a flowchart illustrating a method of varying a scrolling speed of a scroll device according to an embodiment of the present invention;

FIG. 4 is a graph illustrating a relationship between a number of listed items and a scrolling speed according to an embodiment of the present invention; and

FIGS. 5(a)-(c) are overviews illustrating example screen shots of a scroll speed setting process according to an embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

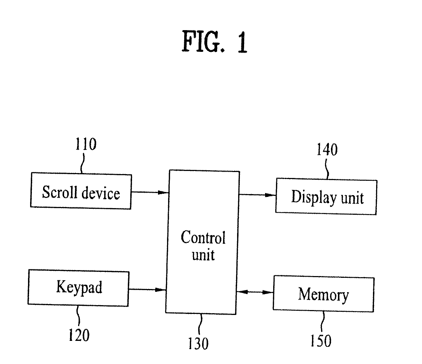

FIG. 1 is a block diagram of a mobile communication terminal according to an embodiment of the present invention. As shown, the mobile communication terminal includes a scroll device 110 for outputting a scrolling signal according to an up/down rotational motion of a roller, a keypad 120 provided with a plurality of numeral and character keys, a control unit 130 configured to receive the scrolling signal from the scroll device 110 and to recognize the rotational motion of the scroll device 110.

Further, the control unit 130 outputs a control signal for performing an action based on the recognized rotational motion of the scroll device 110. The mobile terminal also includes a display unit 140 for displaying different types of information related to operation of the terminal, and a memory 150 for storing one or more programs used to operate the mobile terminal.

The memory 150 also stores different scrolling speeds for different operational modes of the mobile terminal, and the control unit 130 refers to this stored information to variably adjust a scrolling speed of the scroll device 110 based on the operation mode of the terminal. That is, the amount of information scrolled is increased for a faster scrolling speed and a lesser amount of information is scrolled for a lower scrolling speed.

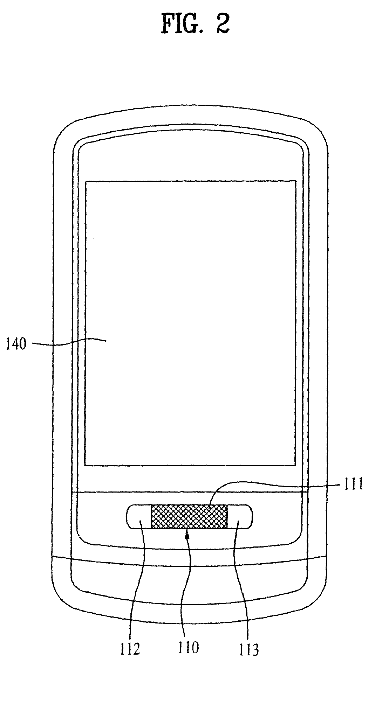

Next, FIG. 2 is an overview of a mobile terminal according to an embodiment of the present invention. Further, in the following description, a slide phone including an upper body having a front display window and that slides upward or downward is used as an example. However, the features of the present invention can be applied to any type of mobile terminal such as a folder type terminal.

As shown in FIG. 2, the mobile terminal includes the scroll device 110 provided on a front side of the terminal. The scroll device 110 includes a roller 111 that makes a rotational motion and/or an up-and-down motion when a user rotates or presses it, and push buttons 112 and 113 provided at left and right sides of the roller 111 to output signals according to push operations, respectively. The mobile terminal also includes the display unit 140 on a front surface of the upper slide part.

According to embodiments of the present invention, the amount of information scrolled for a scrolling input operation is variably adjusted based on an operational mode of the mobile terminal. That is, the control unit 130 selectively only recognizes a scrolling signal sent from the scroll device based on an operation mode of the terminal.

For example, the control unit may recognize a scrolling signal only once in 200ms to achieve a slower scrolling operation compared to recognizing the scrolling signal once every 150ms (which would result in a faster scrolling operation). Thus, the control unit 130 is configured to selectively recognize scrolling signals output by the scroll device 110, which results in the amount of information being scrolled on the display unit to vary.

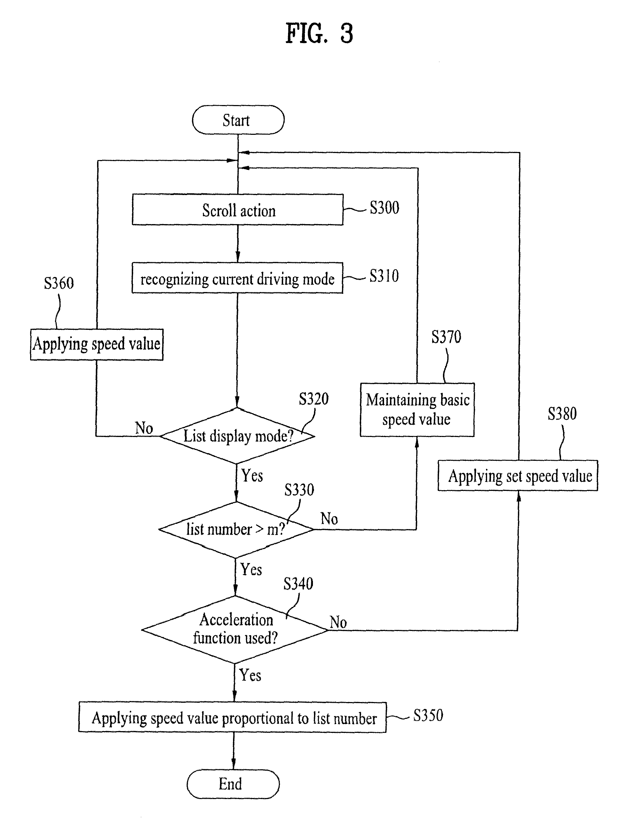

Next, FIG. 3 is a flowchart illustrating a method of variably adjusting a scrolling speed (an amount of information scrolled for a scrolling input operation) according to an embodiment of the present invention. FIGS. 1 and 2 will also be referred to in this description.

As shown in FIG. 3, the control unit 130 recognizes when the user performs a scrolling action using the scroll device 110 (S300). Further, the rotation of the scroll device 110 corresponds to a rotation of the roller 111 and does not include the user pushing the push buttons 112 and 113.

In addition, the control unit 130 also determines the operational mode of the terminal (S310). That is, the control unit 310 determines, for example, if the user is performing a scrolling function while a plurality of main menus or top menus are displayed, whether a plurality of submenus are displayed, whether a plurality of items are displayed, whether the user is selecting one of two options (e.g., a Yes or No selection option), etc.

In more detail, the control unit 130 first determines if the operation mode of the terminal is a list display mode (S320). The list display mode corresponds to a mode in which the user is scrolling a plurality of items such as contacts (a phonebook list), a call record list, file names, picture names, MP3 files, a message record list, etc.

If the control unit 130 determines the operational mode is not the list mode (No in S320), the control unit 130 reads a scrolling speed value from the memory 150 that corresponds the mode the user is operating in. That is, the control unit 130 is responsible for the overall control of the terminal and thus is always aware of what operation mode the user is operating in.

For example, the control unit 130 can refer to a table stored in the memory 150 that includes the different scrolling speeds (time intervals) for the particular operating modes (see Table 1 below, for example). Thus, if the operating mode is the main menu mode, the control unit 130 reads the scrolling speed values for that particular mode. The same is true with respect to the other modes defined in the Table 1.

Further, the control unit 130 selectively determines if the user is operating in the list display mode, because the scrolling speed will be set based on the number of items or lines being scrolled. That is, as shown in FIG. 3, if the user is operating the terminal mode in the list display mode (Yes in S320), the control unit determines if the number of listed items is greater than a predetermined number "m" (S330). A range of numbers may also be used (e.g., 0 to 50 lines, 51-100 lines, etc.). Different scrolling speeds may also be set for each particular range with the scrolling speeds increasing for ranges that include more items (i.e., the scrolling speed would be faster for the range of 101-150 lines than the range of 0-50 lines).

If the control unit 130 determines the number of listed items is greater than the predetermined number "m" (Yes in S330), the control unit 130 then determines if the acceleration function has been enabled (S340). That is, the user can selectively turn on and off the acceleration scrolling function (i.e., to use different scrolling speeds based on the operational mode of the terminal) using the appropriate menu options provided to the terminal according to the present invention.

If the control unit 130 determines the acceleration function has been enabled (Yes in S340), the control unit 130 reads a value from the table or a preset value and uses this value when scrolling the listed items (S350). If the control unit 130 determines the acceleration has been disabled (No in S340), the control unit 130 uses a common or standard value for the scrolling operation. Further, the step S340 of deciding whether a user has set the acceleration function is optional.

In addition, if the control unit 130 determines the number of listed items is not greater than the predetermined number "m" (No in S320), the control unit 130 uses the basic or standard speed value when performing the scrolling operation.

Table 1 shows examples of adjusting values stored in the memory 150 according to an embodiment of the present invention.

**Table 1**

| Distinction | Time Interval | | |
|---|---|---|---|
| | Fast | Normal (medium) | Slow |
| Common | 30 ms | 70 ms | 120 ms |
| Top menu | 130 ms | 150 ms | 200 ms |
| Submenu | 70 ms | 100 ms | 150 ms |
| List display | 50 ms | 65 ms | 80 ms |
| Selection of two items | 150 ms | | |

As shown in Table 1, an interval of time for the control unit 130 to process a signal provided by the scroll device 110 into an input signal is subdivided into 'fast', 'normal', and 'slow' for each of the modes (common, top menu, submenu, and list display). For instance, if a user sets an input sensitivity of the scroll device 110 to 'slow', and the terminal is operating in the top menu mode, a signal provided by the scroll device 110 is recognized by the control unit 130 once each 200ms. Thus, the amount of information is scrolled slower than for the fast mode. The scrolling of information being displayed on the display unit is performed more slowly than in the fast mode.

Similarly, if the terminal is operating in the submenu mode, a signal provided by the scroll device 110 is recognized only once by the control unit 130 for each 150ms in the slow sensitivity scrolling mode. A similar concept applies to the main menu mode and the list mode.

Table 1 also illustrates a "Selection of two items" mode. This mode refers to when the user is selecting one of two items (e.g., Yes and No). For example, the user may be viewing a website on their terminal that asks the user fifty questions in which the user has to answer yes or no for each question by selecting Yes or No buttons. Therefore, in this operational mode, the control unit 130 would refer to the values stored in Table 1. Other operational modes are also possible such as when the user is playing a game on their terminal that requires use of the scroll device 110.

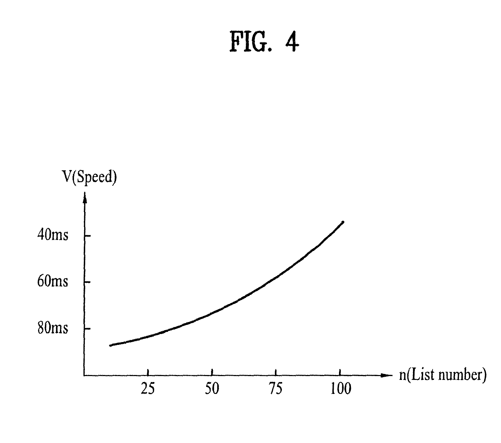

Next, FIG. 4 is a graph of a relationship between a number of listed items and a scrolling speed according to an embodiment of the present invention. Note that in this embodiment, the scrolling speed increases as the number of listed items increases. Therefore, rather than performing the step S330 in FIG. 4, the control unit 130 in this embodiment would refer to the graph shown in FIG. 4 to set the scrolling speed for the specific amount of listed items.

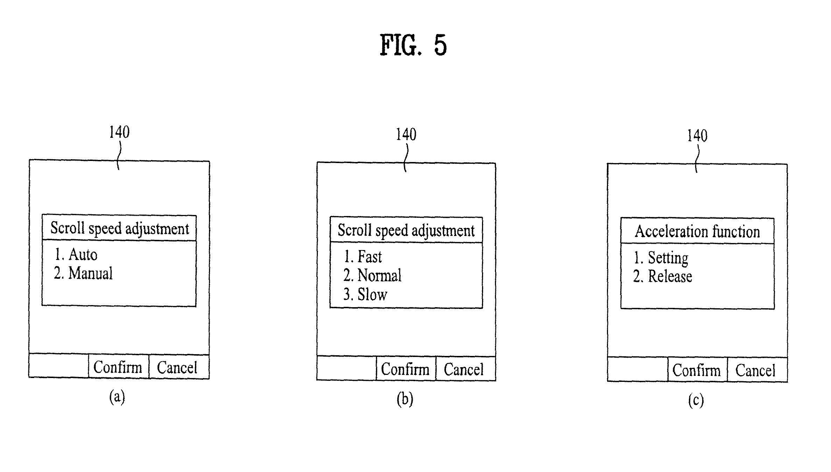

Next, FIGS. 5(a)-5(c) are overviews illustrating examples of menu options the control unit 130 provides to a user to set different features of the present invention. In more detail, FIG. 5(a) illustrates a menu option for setting a scroll speed (e.g., by first selecting a 'mobile phone setting' main menu and then selecting a 'scroll speed setting' submenu). In the menu option shown in FIG. 5(a), the user can select 'auto' so the control unit 130 uses the "common" mode values in Table 1.

Further, when the user selects the 'manual' option, the control unit 130 displays the menu option shown in FIG. 5(b). That is, the menu option shown in FIG. 5 (b) allows the user to set the sensitivity of the scroll device 110 to be 'fast', 'normal' and 'slow'. FIG. 5(c) illustrates a menu option provided by the control unit 130 that allows the user to enable or disable the scrolling speed function of the present invention.

The menu option shown in FIG. 5(c) can be displayed using different methods according to the present invention. For example, the menu option can be included with the setting scroll speed sub menus, or can be displayed by pressing a side key or other button on the terminal.

Accordingly, the present invention adjusts the operational sensitivity of the scroll device, thereby preventing an unexpected scrolling operation from being performed when the user is scrolling information because the rotation-based signal is accumulated in a buffer, for example.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A mobile communication terminal, comprising:
a scroll device configured to output a scrolling signal;
a display configured to display information; and
a control unit configured to variably recognize the scrolling signal of the scroll device based on operational modes of the mobile communication terminal such that an amount of information scrolled on the display using the scroll device variably changes based on the operational modes of the mobile communication terminal.

2. The mobile communication terminal of claim 1, further comprising:
a memory configured to store the operational modes of the mobile communication terminal and corresponding scrolling speeds for the operational modes.

3. The mobile communication terminal of claim 2, wherein the scrolling speeds indicate a time interval in which the control unit recognizes the scrolling signal output by the scroll device such that the amount of information scrolled on the display using the scroll device variably changes based on the operational modes of the mobile communication terminal.

4. The mobile communication terminal of claim 3, wherein the scrolling speeds indicate a fast, medium and slow scrolling speed.

5. The mobile communication terminal of claim 4, wherein the operational modes includes a main menu mode, a submenu mode, a list mode, and a common mode, and
wherein each mode includes the fast, medium and slow scrolling speeds.

6. The mobile communication terminal of claim 5, wherein the time interval for the fast scrolling speed is shorter than the time interval for the medium scrolling speed, and the time interval for the medium scrolling speed is shorter than the time interval for the slow scrolling speed.

7. The mobile communication terminal of claim 1, wherein when the operational mode includes a list mode corresponding to a plurality of items being displayed on the display, the control unit further recognizes the scrolling signal output by the scroll device based on a number of the plurality of items.

8. The mobile communication terminal of claim 7, wherein the control unit determines the number of items and compares the number of items to predetermined ranges for the items, and
wherein a time interval that the control unit recognizes the scrolling signal output by the scroll device is shorter for ranges that have more items than for ranges that have less items.

9. The mobile communication terminal of claim 7, wherein the control unit determines the number of items, and
wherein a time interval that the control unit recognizes the scrolling signal output by the scroll device is shorter for more items than for less items.

10. The mobile communication terminal of claim 1, further comprising:
an input unit configured to input an instruction to instruct the control unit to recognize the scrolling signal during a same time interval for all operational modes of the mobile communication terminal.

11. The mobile communication terminal of claim 4, further comprising:
an input unit configured to prompt a user to set the scrolling speed of the scroll device to the fast, medium or slow speed.

12. The mobile communication terminal of claim 1, further comprising:
an input unit configured to input an instruction to instruct the control unit not to variably recognize the scrolling signal of the scroll device based on the operational modes of the mobile communication terminal.

13. A method of scrolling information on a mobile communication terminal, the method comprising:
outputting a scrolling signal corresponding to a scroll device being moved; and
variably recognizing the output scrolling signal of the scroll device based on operational modes of the mobile communication terminal such that an amount of information scrolled according to the movement of the scroll device variably changes based on the operational modes of the mobile communication terminal.

14. The method of claim 13, further comprising:
storing the operational modes of the mobile communication terminal and corresponding scrolling speeds for the operational modes.

15. The method of claim 14, wherein the scrolling speeds indicate a time interval in which the variably recognizing step recognizes the scrolling signal output by the scroll device such that the amount of information scrolled using the scroll device variably changes based on the operational mode of the mobile communication terminal.

16. The method of claim 15, wherein the scrolling speeds indicate a fast, medium and slow scrolling speed.

17. The method of claim 16, wherein the operational modes includes a main menu mode, a submenu mode, a list mode, and a common mode, and
wherein each mode includes the fast, medium and slow scrolling speeds.

18. The method of claim 17, wherein the time interval for the fast scrolling speed is shorter than the time interval for the medium scrolling speed, and the time interval for the medium scrolling speed is shorter than the time interval for the slow scrolling speed.

19. The method of claim 13, wherein when the operational mode includes a list mode corresponding to a plurality of items being displayed, the variably recognizing step further recognizes the scrolling signal output by the scroll device based on a number of the plurality of items.

20. The method of claim 19, further comprising:
determining the number of items; and
comparing the number of items to predetermined ranges for the items,
wherein a time interval that the variably recognizing step recognizes the scrolling signal output by the scroll device is shorter for ranges that have more items than for ranges that have less items.

21. The method of claim 19, further comprising:
determining the number of items,
wherein a time interval that the variably recognizing
step recognizes the scrolling signal output by the scroll device is shorter for more items than for less items.

22. The method of claim 13, further comprising:
inputting an instruction to instruct the variably recognizing step to recognize the scrolling signal during a same time interval for all operational modes of the mobile communication terminal.

23. The method of claim 18, further comprising:
prompting a user to set the scrolling speed of the scroll device to the fast, medium or slow speed.

24. The method of claim 13, further comprising:
inputting an instruction to instruct the variably recognizing step not to variably recognize the scrolling signal of the scroll device based on operational modes of the mobile communication terminal.
